Europäisches Patentamt

European Patent Office

Office européen des brevets

(11) Veröffentlichungsnummer: **0 533 054 A2**

## (12) EUROPÄISCHE PATENTANMELDUNG

(21) Anmeldenummer: **92115486.0**

(22) Anmeldetag: **10.09.92**

(51) Int. Cl.⁵: **C10M 175/04**, B01D 17/032

(30) Priorität: **14.09.91 DE 9111450 U**
**23.10.91 DE 9113152 U**

(43) Veröffentlichungstag der Anmeldung:
**24.03.93 Patentblatt 93/12**

(84) Benannte Vertragsstaaten:
**AT CH DE ES FR GB IT LI NL PT SE**

(71) Anmelder: **C & H Werkzeugmaschinen GmbH**
**Kreuzstrasse 66**

W-7200 Tuttlingen(DE)

(72) Erfinder: **Combrowski, Zbigniew**
**Kreuzstrasse 66**
**W-7200 Tuttlingen(DE)**

(74) Vertreter: **Weiss, Peter, Dr. rer.nat.**
**Dr. Peter Weiss & Partner Postfach 12 50**
**Zeppelinstrasse 4**
**W-7707 Engen/Hegau (DE)**

(54) **Vorrichtung zum Reinigen eines Flüssigkeitsbades.**

(57) Bei einer Vorrichtung zum Reinigen eines Flüssigkeitsbades, insbesondere einer Schmier- und/oder Kühlflüssigkeit von metallbearbeitenden Maschinen mittels eines Transportbandes (7, 7a), welches um eine von einem Motor angetriebene Antriebsrolle (6) in einer Kammer (5) eines Gehäuses (1) geführt ist und in das Flüssigkeitsbad eintaucht, soll dem Transportband (7, 7a) ein Abstreifer (19, 19a) mit einer gegen die Drehrichtung (c) des Transportbandes (7) gerichteten Abstreifkante (21, 21a) zugeordnet sein.

Fig. 3

EP 0 533 054 A2

Die Erfindung betrifft eine Vorrichtung zum Reinigen eines Flüssigkeitsbades, insbesondere einer Schmier- und/oder Kühlflüssigkeit von metallbearbeitenden Maschinen, mittels eines Transportbandes, welches um eine von einem Motor angetriebene Antriebsrolle in einer Kammer eines Gehäuses geführt ist und in das Flüssigkeitsbad eintaucht.

Insbesondere bei der Zerspanung von Metall wird mit Kühlmitteln gekühlt und geschmiert. Diese Kühlmittel haben einer herstellerbedingte Standzeit, die aber durch Lecköle, z.B. aus Zentralschmierungen, beeinträchtigt werden. Durch das Aufschwimmen von Öl bekommt das Kühlmittel keinen Sauerstoff mehr und kann nicht mehr atmen. Das Ergebnis ist ein Umkippen des Kühlmittels, wodurch Standzeitverluste entstehen. Es bilden sich Bakterienkulturen, die zu Hautausschlägen beim Personal und zu sehr unangenehmen Geruchsbelästigungen führen. Damit ist die Arbeitshygiene eingeschränkt. Ferner sind die Entsorgungskosten für ein derartiges Kühlmittel höher, da die Wechselintervalle sehr kurz gehalten werden müssen.

Derartige Einrichtungen, auch als Öl-Skimmer bezeichnet, werden eingesetzt, um bei Werkzeugmaschinen, Walzgerüsten od. dgl. die notwendige Schmier- bzw. Kühlflüssigkeit homogen und frei von Verunreinigungen zu halten. Diese Schmier- bzw. Kühlflüssigkeit wird von einem Sammelbehälter einer Maschine zugeführt und von dieser, angereichert mit Öl, Schmutz, Schaum und Festkörper, zu dem Sammelbehälter wieder zurückgeführt.

Zur Reinigung dieser Flüssigkeit kommen unterschiedlichste Reinigungs- und Filtereinrichtungen zum Einsatz. Eine Vorreinigung kann bereits im Sammelbehälter selbst durch Sedimentation und Flotation bewirkt werden. Durch Sedimentation können zwar größere und insbesondere spezifisch schwere Partikel ausgeschieden werden; behindert wird jedoch das Absetzen durch die entgegengerichtet wirkende Flotation. Insbesondere bei Öl-in-Wasser-Emulsionen bindet sich ferritischer Abrieb oft an freies Öl und treibt mit diesem auf.

Auf dem Markt sind auch Transportbänder der o.g. Art bekannt, welche in das Flüssigkeitsbad eintauchen. Zur Abnahme von Öl ist in der Regel einem solchen Transportband eine Gegenrolle nahe der Antriebsrolle zugeordnet, über welche das Transportband quasi ausgequetscht wird. Die Verunreinigungen fließen dann seitlich aus dem Spalt zwischen Gegenrolle und Antriebsrolle. Eine derartige Abreinigung des Transportbandes läßt sehr zu wünschen übrig, da genügend Ölreste, Schmutz, Schaum und Festkörper wieder zurück in das Bad gelangen.

Der vorliegenden Erfindung liegt die Aufgabe zugrunde, eine Vorrichtung der o.g. Art zu entwickeln, bei welcher die Abreinigung des Transportbandes wesentlich verbessert und die gesamte Bauweise vereinfacht ist.

Zur Lösung dieser Aufgabe führt, daß dem Transportband ein Abstreifer mit einer gegen die Drehrichtung des Transportbandes gerichteten Abstreifkante zugeordnet ist.

Der Abstreifer ist so ausgestaltet, daß er nicht nur Öl, sondern auch Schaum und Festkörper und anderen Schmutz von der Oberfläche des Transportbandes gesichert abnimmt und einem Ablauf zuführt. Hier wird das Transportband wesentlich besser gereinigt, wobei die Reinigung noch von einem gewählten Andruck der Abstreifkante abhängt.

Erfindungsgemäß wird dieser Andruck auf einfache Weise durch ein Verschieben des Abstreifers in Längsrichtung des Bandes geregelt. Die Abstreifkante soll nämlich einen etwas höheren Abstand von einer Gehäusewand aufweisen, als das hängende Transportband. Im bevorzugten Ausführungsbeispiel ist der Abstreifer als eine Auffangwanne ausgebildet, wobei eine Randkante dieser Wanne die Abstreifkante bildet. Diese Auffangwanne ist dann mit der Rückwand an einer Gehäusewand senkrecht verschiebbar festgelegt, was beispielsweise durch in Langlöcher geführte Schraubenbolzen geschehen kann. Wird diese Auffangwanne angehoben oder abgesenkt, so erhöht oder vermindert sich der Druck der Abstreifkante auf das Transportband bzw. die Antriebsrolle. Dies ist eine sehr einfache aber wirkungsvolle Weise, um die Reinigung des Transportbandes zu verbessern.

Da die Abstreifkante einen erhöhten Druck auf das Tranportband aufbringt, kann es zu Rutschungen des Transportbandes auf der Oberfläche der Antriebsrolle kommen. Diesen Rutschungen wirkt eine Riffelung entgegen, welche in die Oberfläche der Antriebsrolle eingeformt ist.

Ein wesentliches Merkmal der vorliegenden Erfindung ist auch die kompakte Bauweise, welche einen leichten Zusammenbau der gesamten Vorrichtung und dementsprechend auch einen leichten Austausch verschlissener Teile gewährleistet. Hierzu gehört, daß die Antriebsrolle leicht entfernbar eingesetzt ist, so daß insbesondere ein beschädigtes Transportband sehr schnell ausgewechselt werden kann. Zu diesem Zweck besitzt die Antriebsrolle eine Axialbohrung, so daß die Antriebsrolle beim Zusammenbau einfach in ein an einer Gehäusewand festliegendes Gegenlager eingeschoben wird und von der anderen Seite in die Axialbohrung die Antriebswelle eingesteckt wird. Aus diesem Grunde ist auch das gesamte Gehäuse zweigeteilt ausgebildet. Das eigentliche Skimmergehäuse ist nach unten und zu einer Seite hin offen,

EP 0 533 054 A2

während das Motorengehäuse, welches insbesondere den Getriebemotor hält, lediglich aus einem U-förmigen Profil gebildet ist. Dieses Motorengehäuse, aus dem die Antriebswelle herausragt, wird seitlich bzw. von unten her in das Skimmergehäuse eingeschoben und in der gewünschten Lage festgeschraubt. Zum Reinigen oder Auswechseln von Teilen braucht dann lediglich das Motorengehäuse aus dem Skimmergehäuse entnommen zu werden.

Einer besseren Steuerung des Getriebemotors bzw. einer Festlegung einer Laufzeit des Getriebemotors dient eine integrierte Schaltuhr, welche ebenfalls leicht entfernbar ist.

Eine weitere Verbesserung eines Öl-Skimmers wird dadurch erreicht, daß einer Beschwerungsrolle, welche sich normalerweise im Transportband innerhalb des Flüssigkeitsbades befindet und mit diesem mitdreht, zumindest auf einer Seite Flügel angeformt sind. Es soll ausdrücklich darauf hingewiesen werden, daß diese Ausgestaltung einer Beschwerungsrolle selbstverständlich auch bei bereits bekannten Öl-Skimmern Anwendung finden kann und deshalb, für sich gesehen, auch selbständig Schutz beansprucht, wobei jedoch insbesondere die Kombination dieses Merkmals mit den eben beschriebenen bevorzugten Ausführungsformen einen hervorragenden Beitrag zur Lösung der Aufgabe leistet.

Normalerweise sind der Beschwerungsrolle beidseits Seitenflansche angeformt, zwischen denen das Band läuft. In diesem Fall genügt es, wenn diesen Seitenflanschen die entsprechenden Flügel angeformt sind, wobei hierdurch in gewissem Sinne Schaufelräder gebildet werden.

Beim Bewegen des Bandes wird auch die Beschwerungsrolle gedreht, d.h., die Schaufelräder werden in Bewegung gesetzt. Hierdurch wird ein Oberflächensog erzielt, d.h., Schmutz und Öl wird von der Oberfläche des zu reinigenden Flüssigkeitsbades und von weiterer Entfernung her angesaugt und zu dem Band geführt. An diesem Band bleibt deshalb wesentlich mehr Schmutz und Öl hängen, so daß eine wesentlich verbesserte Reinigung erzielt ist.

Die Flügel sollen je nach Wunsch austauschbar bzw. verformbar oder einstellbar sein. Hierdurch kann ein größerer oder kleinerer Sog erzielt werden, je nach dem in was für einem Behälter der Öl-Skimmer eingesetzt wird.

In einem weiteren Ausführungsbeispiel der Erfindung soll anstelle eines bandförmigen Transportbandes ein schlauchförmiges Transportband Verwendung finden. Dieses schlauchförmige Transportband hat den Vorteil, daß es auf der Oberfläche eines zu reinigenden Bades schwimmt und so auch eine größere Badoberfläche gereinigt werden kann.

Zur Führung dieses schlauchförmigen Transportbandes ist eine Antriebsrolle vorgesehen, welche einen entsprechend geformten Kanal besitzt. Dieser Antriebsrolle ist erfindungsgemäß ein Abstreifer zugeordnet, der ebenfalls in seiner Höhe, diesmal allerdings quer zur Bandführungsrichtung, an dem Skimmergehäuse festgelegt ist. Zu seiner Verstellbarkeit dienen die bereits oben erwähnten Hilfsmittel.

Das Band liegt in einem Ausschnitt des Skimmergehäuses und ist durch eine Öffnung einer Abstreiflippe geführt. Diese Öffnung umfaßt das Band mit einer entsprechenden gegen die Bandführungsrichtung gerichteten Abstreifkante, wobei das abgestreifte Produkt nach unten in eine entsprechende Auffangwanne tropft.

Bevorzugt wird die Abstreiflippe von einer Fassung gehalten, die wiederum an einer entsprechenden Tragplatte angeordnet ist. An der Tragplatte befindet sich dann auch bevorzugt die Auffangwanne, so daß die gesamte Abstreifeinrichtung eine eigene Einheit darstellt.

Von der Fassung ragt noch eine Drucklippe ab und übergreift die Antriebsrolle, wobei diese Drucklippe das bandförmige Transporband in den entsprechenden Kanal in der Antriebsrolle drückt und so ein gesicherter Transport gewährleistet ist.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in

Figur 1 eine teilweise aufgebrochen dargestellte Vorderansicht eines erfindungsgemäßen Öl-Skimmers;
Figur 2 eine Draufsicht auf den geöffneten Öl-Skimmer gemäß Figur 1;
Figur 3 einen Querschnitt durch den Öl-Skimmer entlang Linie III-III in Figur 2;

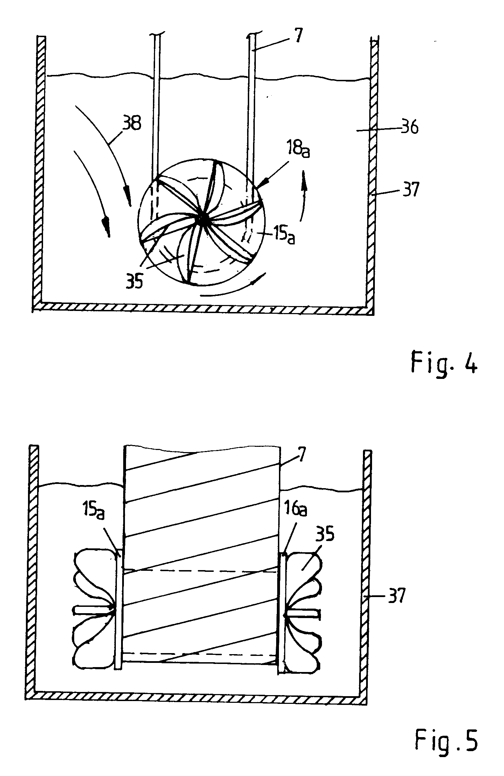

Figur 4 eine Seitenansicht eines Ausschnittes des erfindungsgemäßen Öl-Skimmers im Bereich einer Beschwerungsrolle;
Figur 5 eine Draufsicht auf den Ausschnitt des Öl-Skimmers gemäß Figur 4;
Figur 6 eine Frontansicht auf ein weiteres erfindungsgemäßes Ausführungsbeispiel eines Öl-Skimmers;
Figur 7 einen Querschnitt durch den Öl-Skimmer gemäß Figur 6 entlang Linie VII-VII.

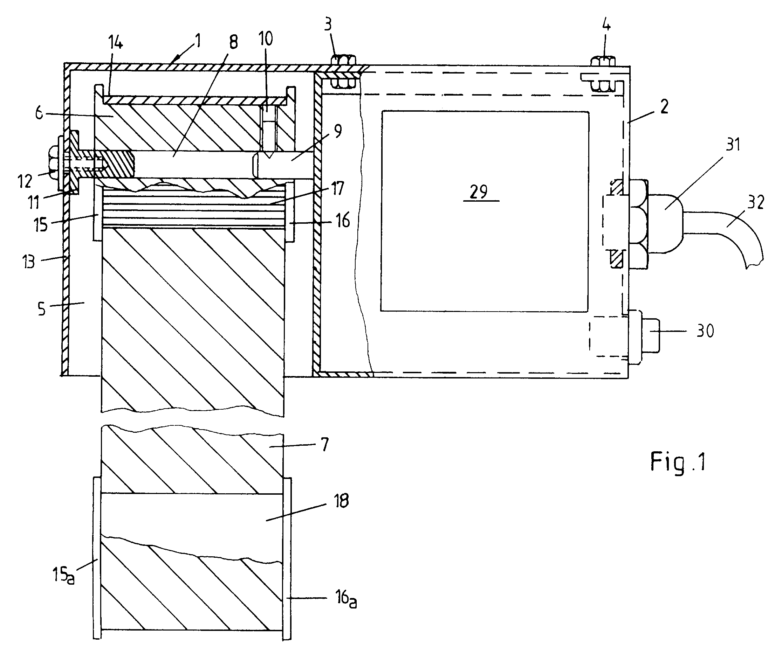

Ein erfindungsgemäßer Öl-Skimmer weist gemäß Figur 1 ein Skimmergehäuse 1 auf, welches nach unten und rechtsseitig offen ist. In diesem Skimmergehäuse 1 ist von rechts her ein Motorengehäuse 2 eingesetzt und über entsprechende Schrauben 3 und 4 mit dem Skimmergehäuse 1 verbunden. Dabei wird links neben dem Motorengehäuse 2 eine nach unten geöffnete Kammer 5 ausgebildet, in welcher eine Antriebsrolle 6 für ein Transportband 7 angeordnet ist.

3

Die Antriebsrolle 6 weist eine Axialbohrung 8 auf, in welche von der Seite des Motorengehäuses 2 her eine Antriebswelle 9 einragt, die über eine Madenschraube 10 befestigt ist.

Von der anderen Seite her ragt ein Gegenlager 11 ebenfalls in die Axialbohrung 8 ein, wobei dieses Gegenlager 11 von einer Axialschraube 12 an einer Seitenwand 13 des Skimmergehäuses 1 gehalten ist.

Das Transportband 7 ist im übrigen auf der Antriebsrolle 6 in einem Kanal 14 zwischen zwei Seitenflanschen 15 und 16 geführt. Zu seiner besseren Haftung an der Oberfläche der Antriebsrolle 6 ist die Antriebsrolle 6 mit einer Riffelung 17 versehen.

Damit das Transportband 7 in Gebrauchslage in einem nicht näher gezeigten Flüssigkeitsbad eintauchen kann, ist es andererseits der Antriebsrolle 6 mit einer Beschwerungsrolle 18 versehen, welches in dem als Endlosband ausgebildeten Transportband 7 hängt, wobei dieses Transportband 7 dort wiederum zwischen zwei Seitenflanschen 15a und 16a geführt ist.

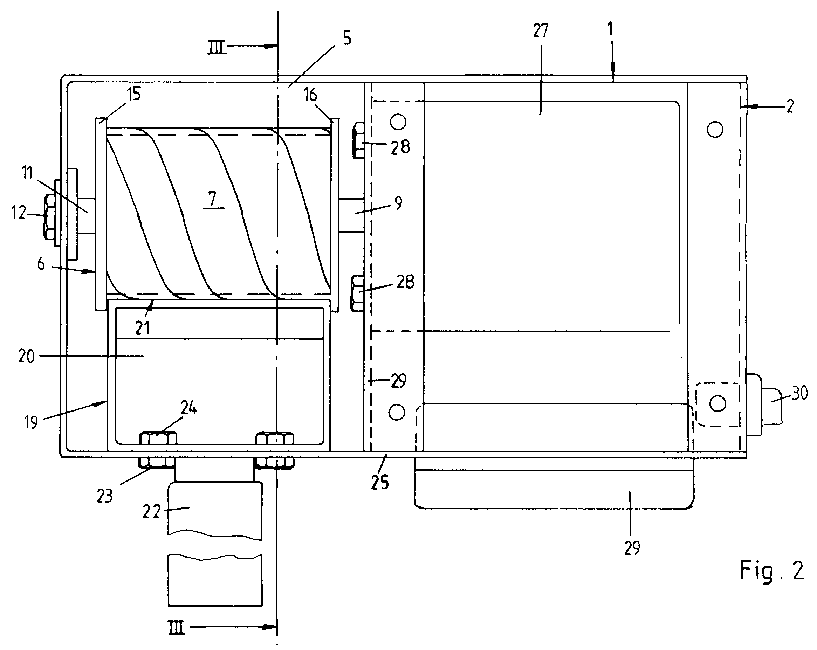

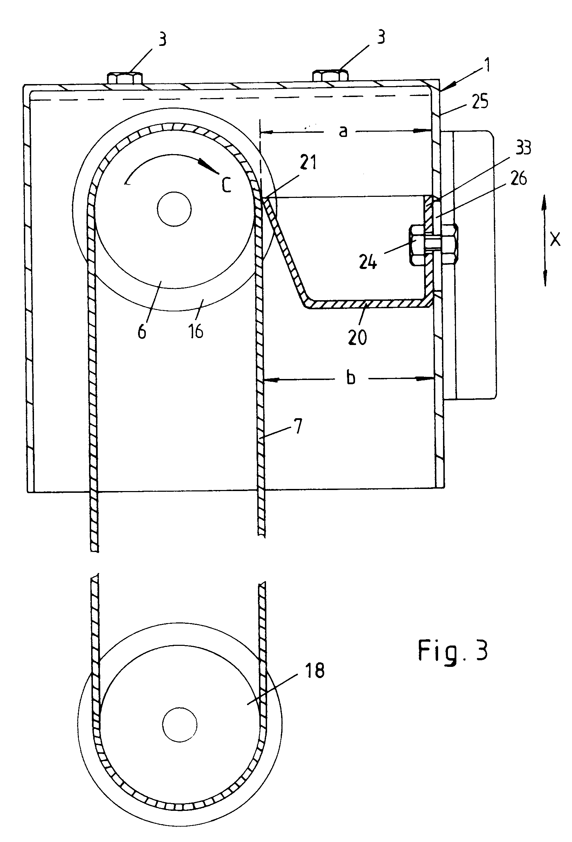

In Figur 2 und 3 ist ferner erkennbar, daß der Antriebsrolle 6 ein Abstreifer 19 zugeordnet ist. Dieser Abstreifer 19 besteht im wesentlichen aus einer Auffangwanne 20, welche zu der Antriebsrolle 6 bzw. zu dem auf der Antriebsrolle 6 geführten Transportband 7 hin eine Abstreifkante 21 ausbildet. Diese Abstreifkante 21 nimmt Schmutz-, Öl- od. dgl. -Reste von dem Transportband 7 ab und leitet diese Reste in ein Ablaufrohr 22. Damit die Abstreifkante 21 entsprechend mit dem Transportband 7 zusammenwirken kann, weist die Antriebsrolle 6 eine Drehrichtung c gemäß Figur 3 gegen die Abstreifkante 21 auf.

Ferner ist erkennbar, daß die Auffangwanne 20 bzw. die Abstreifkante 21 in Richtung x höhenverstellbar ist. Die Auffangwanne 20 ist dabei über einen Schraubenbolzen 23 mit entsprechender Gegenmutter 24 an einer Stirnseite 25 des Skimmergehäuses 1 festgelegt. Der Schraubenbolzen 23 durchsetzt ein senkrecht angeordnetes Langloch 26 und kann in diesem zusammen mit der Auffangwanne 20 in Richtung x geführt werden.

In Figur 2 ist erkennbar, daß in dem Motorengehäuse 2 ein Getriebemotor 27 sitzt, welcher über entsprechende Schrauben 28 mit einer Innenwand 29 des Motorengehäuses 2 verbunden ist. Dabei durchsetzt die Antriebswelle 9 ebenfalls diese Innenwand 29 und führt vom Getriebemotor 27 in die Axialbohrung 8.

Von der Stirnseite 25 her ist ferner in das Skimmergehäuse 1 eine Zeitschaltuhr 29 eingesetzt, welche auch in das Motorengehäuse 2 eingreift. Der Getriebemotor 27 ist der Übersichtlichkeit halber nicht dargestellt. Verbindungsleitungen und Steuerplatinen sind mit dieser Zeitschaltuhr 29 verbunden. Ferner ist noch eine Sicherung 30 sowie eine Zugentlastung 31 und eine Hauptleitung 32 vorgesehen.

Besonders hervorzuheben ist der einfache Aufbau und Zusammenbau des erfindungsgemäßen Öl-Skimmers, wodurch auch eine Reparatur oder ein Austausch beispielsweise des Transportbandes 7 wesentlich erleichtert ist. Zuerst wird das Gegenlager 11 an die Seitenwand 13 in der Kammer 5 montiert. Danach wird auf das Gegenlager 11 die Antriebsrolle 6 zusammen mit dem Tranportband 7 aufgesetzt und dann das Motorengehäuse 7 mit dem eingesetzten Getriebemotor 27 in das Skimmergehäuse 1 eingeschoben. Dies geschieht von unten und von der Seite her, so daß die Antriebswelle 9 in die Axialbohrung 8 der Antriebsrolle 6 leicht eingeführt werden kann. Im Motorengehäuse 2 befindet sich auch bereits die Sicherung 30, die Zugentlastung 31 und die Hauptleitung 32 sowie eine entsprechende Platine zum Anschluß der Zeitschaltuhr 29. Hierbei sind einfache Steckverbindungen gewält, so daß zuerst die Steckverbindungen zwischen Zeitschaltuhr 29 und der Platine hergestellt und dann die Zeitschaltuhr von der Stirnseite 25 des Skimmergehäuses 1 her eingesetzt werden kann.

Der Abstreifer 19 kann ebenfalls auf einfache Art und Weise von unten her in die Kammer 5 eingesetzt werden, wobei die Abstreifkante 21 zwischen den Seitenflanschen 15 und 16 geführt ist. Seine Festlegung erfolgt mittels den Schraubenbolzen 23, die mit den Gegenmuttern 24 zusammenwirken. Dabei ist wesentlich, daß der Abstand a der Abstreifkante 21 von einer Rückwand 33 der Auffangwanne 20 geringfügig größer ist als ein Abstand b des Transportbandes 7 von der Stirnseite 25 des Skimmergehäuses 1, an dem auch der Abstreifer 19 festliegt. Bei einer Verstellung des Abstreifers in Richtung x kann damit auch der Druck der Abstreifkante 21 auf das Transportband 1 erhöht oder vermindert werden.

In einem weiteren Ausführungsbeispiel eines erfindungsgemäßen Öl-Skimmers sind den Seitenflanschen 15a und 16a eine Beschwerungsrolle 18a für ein Transportband 7 Flügel 35 angeformt, welche die Beschwerungsrolle 18a als Schaufelräder ausbilden. Die geometrische Form dieser Flügel 35 kann unterschiedlich ausgestaltet sein, wobei es hier jeweils auf den Wunsch des Benutzers ankommt. Durch die Flügel 35 wird ein Sog in einem Bad 36 innerhalb einer Wanne 37 erzeugt, wie dies durch die Pfeile 38 angedeutet ist. Damit erfolgt ein Anziehen von Öl und Schmutzteilen in Richtung auf das Transportband 7, so daß auch in größeren Behältern bzw. Behältern mit unterschiedlichen Formen Öl- und Schmutzreste zum Band 7 hin verfrachtet und von diesem Band aufgenommen werden.

Die Flügel 35 sollen erfindungsgemäß, falls gewünscht, verformbar sein bzw. können in eine gewünschte Form gedreht werden. Hierbei erfolgt eine Anpassung der Flügel an einen gewünschten Sog bzw. durch Umformen der Flügel kann eine größere Förderleistung erzielt werden. Die Flügel selbst können auch beispielsweise einfache Bleche sein, die an die Seitenflansche 15a und 16a angeschraubt, angeklebt oder sonstwie befestigt sind.

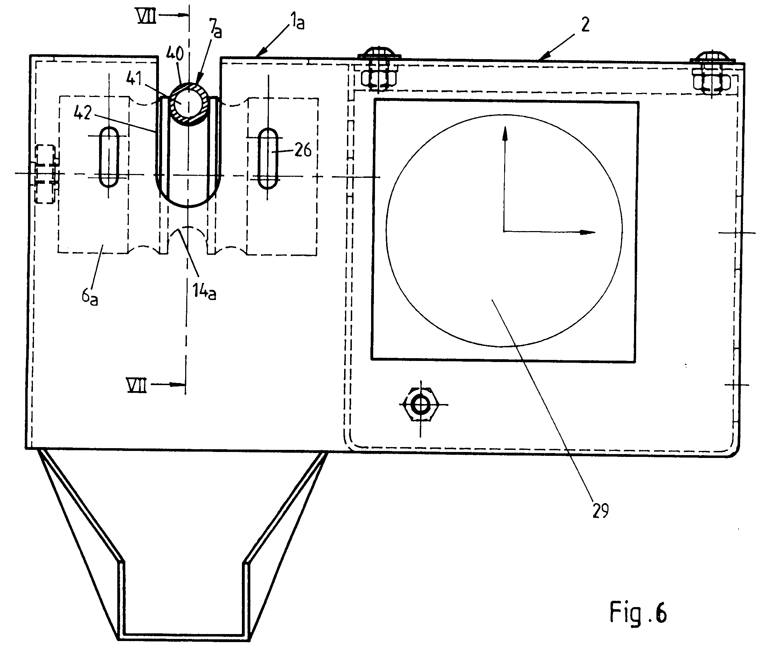

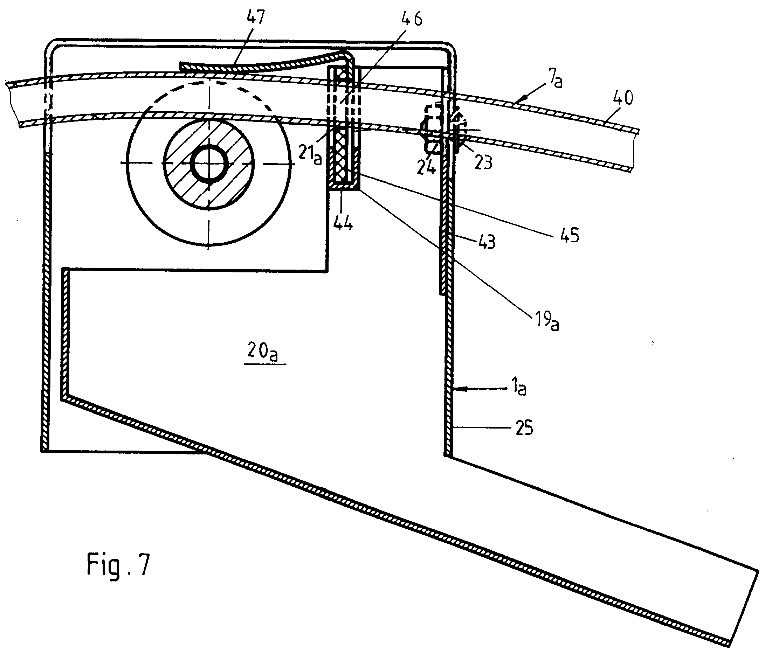

In einem weiteren Ausführungsbeispiel eines Öl-Skimmers gemäß den Figuren 6 und 7 ist dieser zum Führen eines schlauchförmigen Transportbandes 7a geeignet, wobei dieses schlauchförmige Transportband 7a geschnitten dargestellt wird. Es besteht im wesentlichen aus einem Schlauchmantel 40 und einem Innenraum 41, der mit Luft gefüllt sein kann. Der Schauchmantel 40 wird in einem Kanal 14a geführt, der ebenfalls einer entsprechenden Antriebsrolle 6a eingeformt ist. Die übrige Lagerung der Antriebsrolle 6a entspricht derjenigen gemäß Figur 1.

Die Antriebsrolle 6a sitzt in einem Skimmergehäuse 1a, welches sich von dem Skimmergehäuse 1 durch die Anordnung eines Einschnittes 42 unterscheidet, durch welchen das schlauchförmige Transportband 7 geführt ist.

Rechts neben dem Skimmergehäuse 1a befindet sich das Motorengehäuse 2 mit der Zeitschaltuhr 29.

Auch dem schlauchförmigen Transportband 7a ist innerhalb des Skimmergehäuses 1a ein Abstreifer 19a zugeordnet. Dieser weist eine Tragplatte 43 auf, die an der Stirnseite 25 des Skimmergehäuses 1a längsverschieblich festgelegt ist. Hierzu sind wiederum die entsprechenden Langlöcher 26 und die Schraubenbolzen 23 mit Gegenmutter 24 vorgesehen.

Die Tragplatte 43 hält eine U-förmige Fassung 44, in welcher eine Abstreiflippe 45 sitzt. Diese Abstreiflippe 45 besitzt eine Öffnung 46, durch welche der Schlauchmantel 40 hindurchgeführt ist. Bevorzugt ist ein Durchmesser dieser Öffnung 46 geringer, als ein Durchmesser des Schlauchmantels 40, so daß die Öffnungsränder 21 der Abstreiflippe 45 den Schlauchmantel 40 abstreifen.

Das abgestreifte Produkt fällt nach unten in eine Auffangwanne 20a und wird ausgetragen.

An der Tragplatte 43 bzw. der Fassung 44 ist ferner eine Drucklippe 47 vorgesehen, welche das schlauchförmige Transportband 7a oberhalb der Antriebsrolle 6a übergreift und es in den Kanal 14a drückt. Hierdurch wird ein gesicherter Transport des schlauchförmigen Transportbandes gewährleistet.

# EP 0 533 054 A2

POSITIONSZAHLENLISTE

| | | | | | |
|---|---|---|---|---|---|
| 1 | Skimmergehäuse | 34 | | a | Abstand |
| 2 | Motorengehäuse | 35 | Flügel | | |
| 3 | Schrauben | 36 | Bad | | |
| 4 | " | 37 | Wanne | | |
| 5 | Kammer | 38 | Pfeil | c | Drehrichtung |
| 6 | Antriebsrolle | 39 | | | |
| 7 | Transportband | 40 | Schlauchmantel | | |
| 8 | Axialbohrung | 41 | Innenraum | | |
| 9 | Antriebswelle | 42 | Einschnitt | | |
| 10 | Madenschraube | 43 | Tragplatte | | |
| 11 | Gegenlager | 44 | Fassung | | |
| 12 | Axialschraube | 45 | Abstreiflippe | | |
| 13 | Seitenwand | 46 | Öffnung | | |
| 14 | Kanal | 47 | Drucklippe | | |
| 15 | Seitenflansch | 48 | | | |
| 16 | " | 49 | | x | Höhenverstellbarkeit |
| 17 | Riffelung | 50 | | | |
| 18 | Beschwerungsrolle | 51 | | | |
| 19 | Abstreifer | 52 | | | |
| 20 | Auffangwanne | 53 | | | |
| 21 | Abstreifkante | 54 | | | |
| 22 | Ablaufrohr | 55 | | | |
| 23 | Schraubenbolzen | 56 | | | |
| 24 | Gegenmutter | 57 | | | |
| 25 | Stirnseite | 58 | | | |
| 26 | Langloch | 59 | | | |
| 27 | Getriebemorot | 60 | | | |
| 28 | Innenwand | 61 | | | |
| 29 | Zeitschaltuhr | 62 | | | |
| 30 | Sicherung | 63 | | | |
| 31 | Zugentlastung | 64 | | | |
| 32 | Hauptleitung | 65 | | | |
| 33 | Rückwand | 66 | | | |

**Patentansprüche**

**1.** Vorrichtung zum Reinigen eines Flüssigkeitsbades, insbesondere einer Schmier- und/oder Kühlflüssigkeit von metallbearbeitenden Maschinen mittels eines Transportbandes, welches um eine von einem Motor angetriebene Antriebsrolle in einer Kammer eines Gehäuses geführt ist und in das Flüssigkeitsbad eintaucht,

dadurch gekennzeichnet,

daß dem Transportband (7, 7a) ein Abstreifer (19, 19a) mit einer gegen die Drehrichtung (c) des Transportbandes (7) gerichtete Abstreifkante (21, 21a) zugeordnet ist.

2. Vorrichtung zum Reinigen eines Flüssigkeitsbades, insbesondere einer Schmier- und/oder Kühlflüssigkeit von metallbearbeitenden Maschinen mittels eines Tranportbandes, welches um eine von einem Motor angetriebene Antriebsrolle in einer Kammer eines Gehäuses geführt ist und in das Flüsskeitsbad eintaucht, dadurch gekennzeichnet, daß im Transportband (7) innerhalb des Flüssigkeitsbades (36) eine Beschwerungsrolle (18a) hängt, welche zumindest auf einer Seite mit Flügeln (35) versehen ist.

3. Vorrichtung nach Anspruch 2, dadurch gekennzeichnet, daß die Flügel (35) Seitenflanschen (15a und 16a) der Bewegungsrolle (18a) angeformt sind und mit dieser Schaufelräder ausbilden.

4. Vorrichtung nach Anspruch 2 oder 3, dadurch gekennzeichnet, daß die Flügel (35) verformbar bzw. verstellbar sind.

5. Vorrichtung wenigstens einem der Ansprüche 1 bis 4, dadurch gekennzeichnet, daß der Abstreifer (19, 19a) in der Kammer (5) an dem Gehäuse (1, 1a) verschiebbar festgelegt ist.

6. Vorrichtung nach Anspruch 5, dadurch gekennzeichnet, daß der Abstreifer (19, 19a) als eine Auffangwanne (20, 20a) ausgebildet ist, welche über Schraubenbolzen (23) und Gegenmuttern (24) mit ihrer Rückwand (33) an der Gehäusewand (25) festgelegt ist, wobei die Schraubenbolzen (23) senkrechte Langlöcher (26) durchsetzen.

7. Vorrichtung nach wenigstens einem der Ansprüche 1 bis 6, dadurch gekennzeichnet, daß die Oberfläche der Transportrolle (6) eine Riffelung (17) aufweist.

8. Vorrichtung nach wenigstens einem der Ansprüche 1 bis 7, dadurch gekennzeichnet, daß die Antriebsrolle (6) eine Axialbohrung (8) aufweist, in welche einerseits ein an einer weiteren Gehäusewand (13) befestigtes Gegenlager (11) und andererseits eine Antriebswelle (9) eingreifen.

9. Vorrichtung nach wengistens einem der Ansprüche 1 bis 8, dadurch gekennzeichnet, daß das Gehäuse aus einem nach unten und einer Seite hier offenen Skimmergehäuse (1) sowie einem U-förmigen Motorengehäuse(2) besteht, welches in das Skimmergehäuse (1) eingesetzt und über Schrauben (3, 4) an diesem befestigt ist.

10. Vorrichtung nach wenigstens einem der Ansprüche 1 bis 9, dadurch gekennzeichnet, daß dem Motor (27) eine Zeitschaltuhr (29) zugeordnet ist.

11. Vorrichtung nach wengistens einem der Ansprüche 1 bis 10, dadurch gekennzeichnet, daß der Abstand (a) zwischen einer Gehäusewand (25), an welcher der Abstreifer (19) festgelegt ist und der Abstreifkante (21) größer ist als der Abstand zwischen einem bandförmigen Transportband (7) und dieser Gehäusewand, wobei der Abstreifer (19) in Längsrichtung des Bandes (7) verschiebbar ist.

12. Vorrichtung nach wenigstens einem der Ansprüche 1 bis 10, dadurch gekennzeichnet, daß der Abstreifer (19a) eine Öffnung (46) aufweist, durch welche ein schlauchförmiges Transportband (7a) geführt ist, wobei die Öffnung (46) quer zur Führungsrichtung des schlauchförmigen Transportbandes (7a) verstellbar ist.

13. Vorrichtung nach Anspruch 12, dadurch gekennzeichnet, daß der Durchmesser der Öffnung (46) etwas geringer ist als der Durchmesser eines Schlauchmantels (40) des Transportbandes (7a).

14. Vorrichtung nach Anspruch 12 oder 13, dadurch gekennzeichnet, daß die Öffnung (46) einer Abstreiflippe (45) eingeformt ist und die Abstreifkante (21a) aus bildet, wobei die Abstreiflippe (45) in einer Fassung (44) sitzt, die verschiebbar an dem Skimmer-Gehäuse (1a) angeordnet ist.

15. Vorrichtung nach Anspruch 14, dadurch gekennzeichnet, daß von der Fassung (44) aus eine Drucklippe (47) die Antriebsrolle (6a) übergreift und das schlauchförmige Transportband (7a) in einen Kanal (14a) in der Antriebsrolle (6a) hält.

Fig.1

Fig. 2

EP 0 533 054 A2

Fig. 3

Fig. 4

Fig. 5

Fig. 6

Fig.7